# EUROPEAN PATENT SPECIFICATION

(11) **EP 2 375 524 B1**
(45) Date of publication and mention of the grant of the patent: **15.01.2014**
(21) Application number: 10159583.3
(22) Date of filing: 12.04.2010
(51) Int. Cl.: H02G 15/013

(54) **Cable splice enclosure**
Kabelspleissgehäuse
Enceinte d'épissure de câbles

(43) Date of publication of application: 12.10.2011
(73) Proprietor: 3M Innovative Properties Company, Saint Paul, MN 55133-3427 (US)
(72) Inventor: Schubert, Bernd, 50823, Koeln (DE); Petry, Michael, 46537, Dinslaken (DE); Lohmeier, Gerhard, 50937, Koeln (DE); Busemann, Friedrich, 21385, Amelinghausen (DE)
(74) Representative: Bergen, Katja

(56) References cited:
- EP-A2- 0 384 176
- DE-U1- 8 912 585
- JP-A- 9 215 153

## Description

The invention relates to a cable splice enclosure comprising two housing parts that are closed together to define at least one cable-entry aperture into the enclosure and an annular cable seal that has a cable-receiving aperture therein and is seated against an annular face provided around the cable-entry aperture by the housing parts, wherein the cable seal is split along a line that extends from the external surface of the seal to the cable-receiving aperture to permit a cable to be inserted into the cable-receiving aperture.

Such cable splice enclosures are used to protect splices of a cable, for example of low voltage cables. Such splices may be inline splices of a cable - a connection between two ends of a cable - or branch splices of a cable - a branch of a main cable. Cable splice enclosures usually comprise a housing consisting of several parts in which the connection of the cables is placed during installation of the enclosure. The enclosure housings define at least one cable-entry aperture. After positioning the cable connection in the housing the housing is closed and filed with a sealing or insulating material to protect the cable connection against environmental influences such as for example dirt, durst and/or moisture.

Cable splice enclosures with two housing parts and an annular cable seal are known in the prior art. For example DE 93 04 658 U (SLG, Kunststoff-Fabrik und Formenbau-GmbH) discloses a cable splice enclosure with two housing parts that are closed together to defined at least one cable-entry aperture into the enclosure and an annular seal. DE 199 58 982 A1 (Höhne GmbH) also discloses a cable splice enclosure with two housing parts and an annular seal.

Apertures of housings of cable splice enclosures known in the prior art have also other than annular shapes, for example an elliptic shape, such as the elastic seal in the Kit 91-B152CMP (commercially available from 3M Company, St. Paul MN). This seal does have two cable-receiving apertures for two cables with different diameters. Around each cable-receiving aperture the known seal provides two annular portions that are removable to increase the size of the cable-receiving aperture to adapt it to different cable diameters. For making the insertion of a cable into the cable-receiving aperture easier the known seal provides two splits - one for each cable-receiving aperture. The spits extend from the external surface of the seal to the cable-receiving aperture. The splits both have a slightly curved shape.

EP 0 384 176 A2 discloses a cable splice enclosure with a one part housing and a sealing comprising a split with two portions.

JP-A-09/215 153 discloses a cable splice enclosure with a two-part housing and a sealing comprising a plurality of splits comprising two portions.

There is a need for a cable splice enclosure with a seal that is easy to assemble and that reliable protects a splice and/or branch of a cable.

The present invention provides a cable splice enclosure comprising two housing parts that define at least one cable-entry aperture into the enclosure when they are closed and a cable seal with a cable-receiving aperture therein that is seated against a face provided around the cable-entry aperture by the housing parts. The seal is split along a line that extends from the external surface of the seal to the cable-receiving aperture to permit a cable to be inserted into the cable-receiving aperture. The split comprises two portions. A first portion extends from the external surface of the seal to a point inside the inner circumference of the seal, the first portion being substantially perpendicular to the closing direction of the housing parts. A second portion is inclined to the first portion and extends there from towards the cable-receiving aperture.

A cable splice enclosure is a housing for a splice or branch of cables that houses the splice or branch and protects it against environmental influences, such as for example dust, dirt, water etc. The splice may be an inline splice between two cable ends as well as a branch of a cable with a main cable and two or more branch cables. The housing parts may be made out of an insulating material that has weather proofed properties, such as for example polypropylene, polycarbonate, polystyrene or polymethylmethacrylate or any other appropriate material.

The enclosure comprises at least two housing parts. Having more than one housing part is important since an assembly of the enclosure would otherwise be very difficult. For positioning a cable splice or branch with all its parts inside the enclosure it is helpful to have an assembly that can be opened and closed. The enclosure according to the invention may also have more than two parts, such as for example three parts (one lower part or base and two upper parts). For closing the enclosure the housing parts may be moved relative to each other in a linear way. For example a lower part is placed somewhere and the upper part is put on top of it by moving it straight down wards to the lower part. In that case the closing direction may be a linear one at right angles to the plane of the cables within the enclosure. The closing direction may also be another than a linear one. This may be the case if the housing parts are somehow linked together and are closed by pivoting one part relative to the other.

The cable splice enclosure according to the invention further has a cable seal that is seated against a face provided around the cable-entry aperture by the housing parts. The function of the seal is to seal the cable-entry aperture against the entering cable such that when the sealing or insulating material is poured into the housing of the enclosure it stays inside of it. The cable seal according to the invention has a cable-receiving aperture. The cable-receiving aperture is preshaped in the seal. By this installation time is saved since the aperture does not need to be cut into the seal during installation. The seal further provides a split along a line that extends from the external surface of the seal to the cable-receiving aperture to permit a cable to be inserted into the cable-receiving aperture. The split also helps to save installation time since the seal may easily be put around the cable by inserting the cable through the split instead of threading the seal over the cable.

The split of the seal of the enclosure according to the invention has two portions. A first portion extends from the external surface of the seal to a point inside the inner circumference of the seal, the first portion being substantially perpendicular to the closing direction of the housing parts. The external portion of the split that is substantially perpendicular to the closing direction of the housing parts provides a seal that reliable seals the enclosure. The material on the two sides of the split abut each other properly after closing the housing parts and are not positioned offset each other since the closing direction does not force the material on the two sides of the split in any offset direction. That ensures that no gab is formed into the sealing during the closing process and that no sealing or insulating material leaks through the split of the seal during filling of the enclosure with insulating material.

A second portion or the split of the seal is inclined to the first portion and extends there from - that is from the point inside the inner circumference of the seal - towards the cable-receiving aperture thereby generating a V-shaped notch between the second portion of the split and the cable-receiving aperture. Experiments have shown that a seal with a split with two portions wherein the second portion is inclined to the first portions shows very good sealing properties. The second portion of the seals provides a region (V-shaped notch) in which relative movement can occur, along the length of the second portion of the split between the seal material on the two sides of this portion of the split when the housing parts are closed together during the closing process.

The closing process of the two housing parts of the enclosure impacts the seal in the following way. Firstly the V-shaped notch of the seal is forced into a space provided by the outer diameter of a cable within the cable-receiving aperture of the seal and the second portion of the split. Secondly the material on the two sides of the first portion of the split are pushed on top of each other with a parallel movement since the second portion of the split is oriented substantially perpendicular to the closing direction.

According to another embodiment of the splice enclosure according to the invention the cable seal may have an external surface that is configured to position the seal in a particular orientation in the enclosure. The cable seal is seated against a face provided around the cable-entry aperture by the hosing parts. If the external surface of the seal has a certain shape that is adapted to the shape of the face around the cable-entry aperture it is possible to put the seal in a certain way into the enclosure thereby predetermining the orientation of the seal and therewith the orientation of the split in the assembled enclosure. This feature helps to provide a reliable product since - because of the split - the seal is not symmetric and has a preferred orientation for best results. A keying is an easy way to predetermine a position of the seal within the enclosure and it allows easy and repeatable assembly with minimal instruction. By that installation time may be saved.

The seal may comprise a flat portion engageable with a flat surface in the enclosure to position the seal in a particular orientation in the enclosure. A flat portion in the seal and a corresponding flat portion in the surface of the enclosure, e.g. the face provided around the cable-entry aperture by the housing parts, is an easy and cheap way to realise a keying of the seal, since no additional production steps are needed. Only the shape of the seal and the housing parts needs to be adapted. Any other reasonable shapes of the outer surface of the seal as well as of the face provided around the cable-entry are also possible, such as for example zigzag shape, a specially curved shape etc..

According to another embodiment of the invention the said flat portion of the external surface of the seal may be substantially perpendicular to the first portion of the split in the seal. In other words the flat portion of the external surface of the seal may be substantially perpendicular to the closing direction of the two housing parts. This orientation allows a good visual verification of the flat portion thereby ensuring the right insertion of the seal into the face of the cable-entry aperture of the housing parts. Furthermore may the flat portion with such an orientation be used as guiding area for the insertion process of the seal into the face of the cable-entry aperture of the housing parts.

The first portion of the split of the seal may be located offset of the junction between the housing parts. A seal with these features provides good sealing properties since the junction of the housing parts is covered with the seal thereby sealing the junction. The split of the seal may be located offset the junction between the housing parts, for example above the junction as will be described with reference to the drawings.

The second portion of the split may be curved or it may be linear. When the second portion of the split is curved, it may also be stronger curved in the direction towards the first portion of the split and it may be less stronger curved in the direction towards the cable-receiving aperture. This shape has the advantage that the tip of the V-shaped notch that is generated by the second portion of the split and the cable-receiving aperture is not too sharp and may be easier pushed into the above described space during the closing process of the housing parts.

The seal of the splice enclosure according to the invention may have a substantially annular shape. Annular shape in the sense of the invention does mean that the shape of the seal is substantially annular but may also have any kind of keying features as described above. Since cables usually have an annular diameter an substantially annular seal provides good sealing properties since it covers the cable with the same amount of material in each direction. Furthermore this shape of seal provides the possibility of using the same kind of seal for all cable-entries of one splice enclosure. This is another cost saving activity since only one kind of seal needs to be produced for the whole assembly.

The seal may further comprise at least one annular portion around the cable-receiving aperture, the annular portion being removable to increase the size of the cable-receiving aperture. This feature provides the possibility of using one seal for cables with different cable diameter with the advantage that only one seal needs to be produced for several applications.

The seal may be formed from a compressible foam material. A seal out of a compressible, that is elastically deformable foam material has the advantage of providing good sealing properties since the seal - if its dimensions are bigger than the cross section of the cable entry - may expand in the face that is provided by the two housing parts. Having a seal out of a compressible foam material has further advantages in the production since the tolerances between several parts are less important.

According to another embodiment of the invention the enclosure may be shaped to contain a branch splice and comprising a cable-entry aperture for a main cable and two cable-entry apertures for branch cables. According to yet another embodiment of the invention the enclosure may be shaped to contain an inline splice and comprising two cable-entry apertures for cable ends to be connected.

The invention will now be described in more detail with reference to to the following Figures exemplifying particular embodiments of the invention:
- Fig. 1: a perspective view of two housing parts of one embodiment of an enclosure according to the invention for a T-shaped branch splice in a closed position;
- Fig. 2: a perspective view of the two housing parts of the enclosure of Figure 1 in an open position together with three cable seals;
- Fig. 3: a perspective view of two housing parts of another embodiment of an enclosure according to the invention for a Y-shaped branch splice in a closed position;
- Fig. 4: a perspective view of the two housing parts of the enclosure of Figure 3 in an open position together with three cable seals;
- Fig. 5: a perspective view of a loop of a snap fit element of an embodiment of the enclosure according to the invention;
- Fig. 6: a front view of a seal of an embodiment of the enclosure according to the invention and
- Fig. 7: a front view of a cable-entry aperture of a closed enclosure with a seal.

Herein below various embodiments of the present invention are described and shown in the drawings wherein like elements are provided with the same reference numbers.

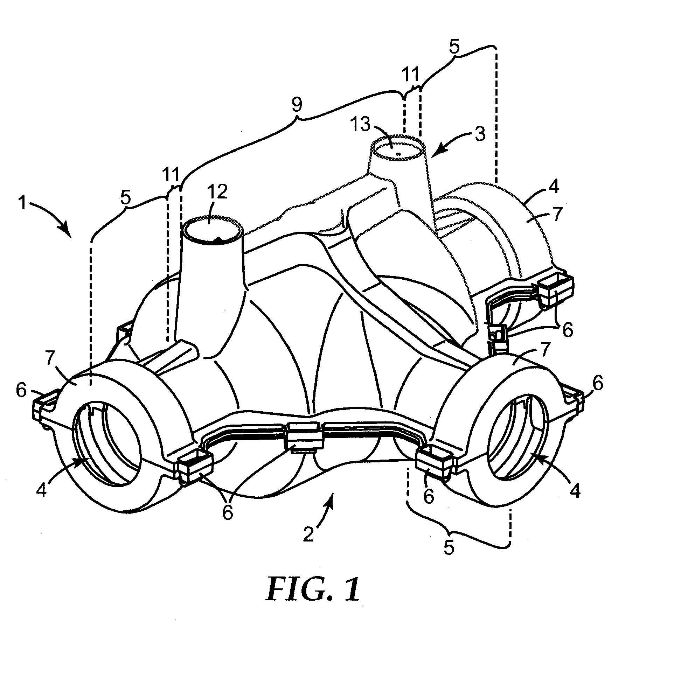

Figure 1 is a perspective view of one embodiment of an enclosure 1 according to the invention in a closed position used to surround and protect a T-shaped branch splice of a cable (not shown). The formation of a branch splice typically involves removal of end portions of the cable sheath and removing a window in the main cable to enable the wires (or in the case of multi-core cables, the individual wires) of the cables to be spliced together. The cables with the splice will than be positioned inside the enclosure 1 with the cables leading through openings or cable-entry apertures 4 which will than be closed and filled with an insulating material, for example a resin that hardens after being filled in the enclosure 1.

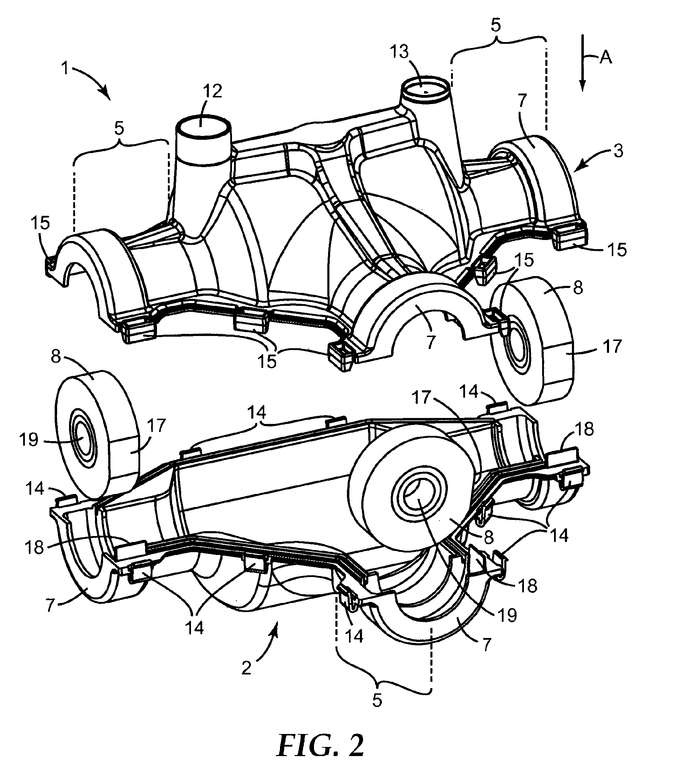

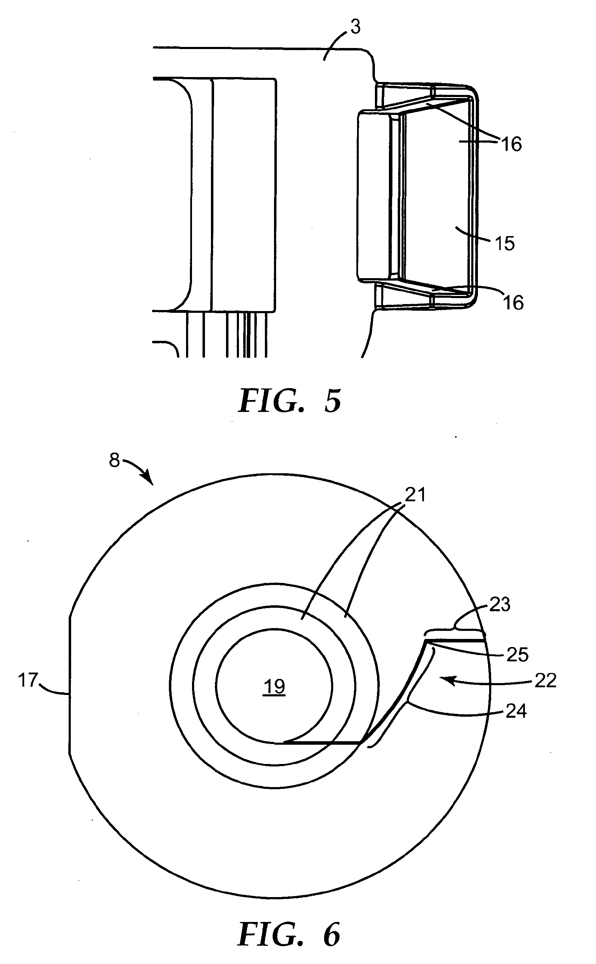

The enclosure 1 has a base part 2 and an upper part 3 (as viewed in the drawings) that are connected with each other over snap fit structures 6 that will be described in more detail with reference to Figures 2 and 5. The enclosure 1 is T-shaped and has three end sections 5, each end section 5 provides an openings 4 where the cables may enter the enclosure 1. T-shaped in the sense of the invention does mean that two end sections 5 are arranged in a line and the third end section 5 extends substantially perpendicular to this line. Each end section 5 further provides a face 7 for a seal 8 (not shown in Figure 1) for sealing an entering cable against the housing of the enclosure 1. The end sections 5 have an approximately cylindrical shape. The enclosure 1 further has a T-shaped central section 9 with a diameter that is bigger than the diameter of the end sections 5 for housing a connector (not shown) of the splice or branch. Between the central section 9 and the end sections 5 a tapered section 11 is provided. The tapered section 11 has an increasing diameter thereby connecting the end sections 5 with the central section 9. A filler opening 12 is positioned offset the centre of the central section 9. The enclosure 1 further has a vent 13 that is also positioned offset the centre of the central section 9. The vent 13 allows air to leave the enclosure during the filling process. Having filler opening 12 and vent 13 offset the centre of the enclosure 1 provides the advantage that they are positioned with a distance from the connector thereby ensuring that the connector is properly surrounded by insulating material. A further advantage is that no additional vent is needed.

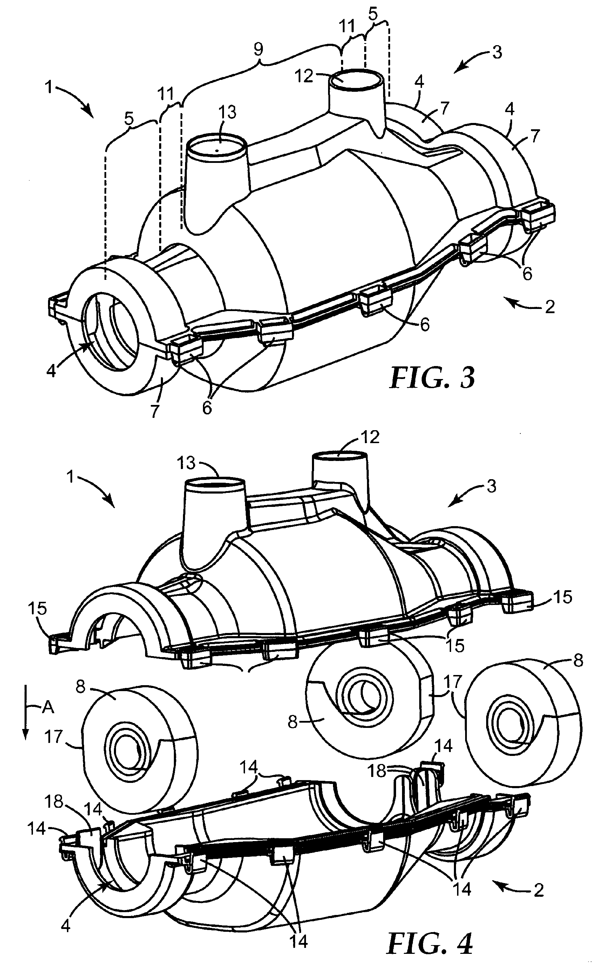

Figure 2 is a perspective view of the two housing parts 2 and 3 of the enclosure 1 of Figure 1 in an open position together with three cable seals 8. The base part 2 of the enclosure 1 provides hooks 14 located at its upper rim. The hooks 14 are more or less spaced with an equal distance from each other. At each opening 4 of the end sections 5 a hook 14 is placed next to the face 7 to provide a close fit of the two housing parts 2 and 3. The upper part 3 of the enclosure provides loops 15 corresponding to the hooks 14 of the base part 2. Figure 5 is a perspective view of the loop 15 of the enclosure 1 shown in Figure 1 from above. The inner surfaces 16 of the loop 15 have a conical shape so that the upper diameter of the loop 15 is bigger than the lower diameter. This shape provides guiding surfaces for the hocks 15 from the base part 2. During closing of the enclosure 1 the hocks 15 will be guided by the inner surfaces 16 of the loops 15 and thereby ensuring that base part 2 and upper part 3 will be closed properly. The closing direction of the upper housing part 3 relative to the base part 2 is indicated by the arrow A in Figures 2 and 4.

The cable seals 8 have a cylindrical shape with an outer surface that has a flat portion 17 (see also Figure 6). The flat portion 17 is engageable with a corresponding flat portion 18 in each face 7 of the end portions 5 of the enclosure 1. As can be seen in Figure 2 and 4 the flat portion 18 extends over the level of junction 26 of the two housing parts and functions as a guiding or support area for the seals 8 during the closing process especially when cables with a big diameter are lying in the seals 8. The flat guiding portion 18 helps to hold the seals 8 that might expand out of the face 7 provided around the cable-entry aperture by the housing parts 2 and 3. This configuration makes sure that the seal is positioned in a particular orientation in the enclosure 1. The seals 8 each have a cable-receiving aperture 19 that has a round shape to permit a cable to be inserted into the seal 8. The cable seals 8 further provide two annular portions 21 around the cable-receiving aperture 19. The annular portions 21 are removable to increase the seize of the cable-receiving aperture 19 to easily adapt the seals 8 to different cable diameters. The seal 8 is compressed when the two housing parts 2 and 3 are being closed thereby sealing an entering cable against the housing of the enclosure 1.

Figure 6 is a front view of a seal 8 of the enclosure 1 shown in Figures 1 to 4. Each seal 8 provides a split 22. The split 22 extends from the outer or external surface of the seal 8 to the cable-receiving aperture 19. The split 22 has two portions a first portion 23 and a second portion 24. The first portion 23 of the split 22 extends from the external surface of the seal 8 to a point 25 inside the inner circumference of the seal. The first portion 23 is substantially linear and extends substantially perpendicular to the closing direction A of the two housing parts 2 and 3. The second portion 24 is shaped curved and it is inclined to the first portion 23 and extends there from towards the cable receiving aperture 19. Between the second portion 24 of the split 22 and the cable-receiving aperture 19 a V-shaped notch is built. The slit 22 also extends through the two annular portions 21. The slit 22 has a linear extension through the annular portions 21.

Figure 3 is a perspective view of another embodiment of an enclosure 1 according to the invention in a closed position used to surround and protect a Y-shaped branch splice of a cable (not shown). The enclosure 1 has a base part 2 and an upper part 3 that are connected with each other over snap fit structures 6 that will be described in more detail with reference to Figures 4 and 5. The enclosure 1 is Y-shaped and has three end sections 5, each end section 5 provides an openings 4 where cables may enter the enclosure 1. The enclosure 1 comprises two cable entry apertures 5 for a main cable and one cable-entry aperture 5 for a branch cable. Y-shaped in the sense of the invention does mean that two end sections 5 for the main cable are arranged in a line and the third end section 5 for the branch cable extends substantially parallel to one of these end sections 5. Each end section 5 further provides a face 7 for a seal 8 (not shown in Figure 3) for sealing an entering cable against the housing of the enclosure 1. The end sections 5 have an approximately cylindrical shape, the end section 5 containing the branch cable is a cone with an angle of approximately 7.5 °. The enclosure 1 further has a central section 9 with a diameter that is bigger than the diameter of the end sections 5 for housing a connector (not shown) of the splice or branch. Between the central section 9 and the end sections 5 a tapered section 11 is provided. The tapered section 11 has an increasing diameter thereby connecting the end sections 5 with the central section 9. A filler opening 12 is positioned offset the centre of the central section 9. The enclosure 1 further has a vent 13 that is also positioned offset the centre of the central section 9. Having filler opening 12 and vent 13 offset the centre of the enclosure 1 provides the advantage that they are positioned with a distance from the connector thereby ensuring that the connector is properly surrounded by insulating material. A further advantage is that no additional vent is needed.

Figure 4 is a perspective view of the two housing parts 2 and 3 of the enclosure 1 of Figure 3 in an open position together with three cable seals 8. The base part 2 of the enclosure 1 provides hooks 14 located at its upper rim. The hooks 14 are more or less spaced with an equal distance from each other. At each opening 4 of the end sections 5 a hook 14 is placed next to the face 7 to provide a close fit of the two housing parts 2 and 3. One hook 14 is placed between the two cable openings 4 that are positioned substantially parallel to each other. They provide a close fit of the two housing parts 2 and 3 between the two openings 4 thereby also providing a close fit to the seals 8. The hook 14 between the two cable openings 4 may stand a little bit higher than the other hooks 14 being easily accessible between the two openings 4 especially when cables enter the enclosure through the openings 4. In addition a hook that is positioned higher than the other hooks 14 supports the centring of the upper housing part 3 relative to the base part 2 during the closing process of the enclosure 1. In this embodiment the flat portion 18 of the cable-entry aperture 4 of the branch cable and the flat portion 18 of the adjacent cable-entry aperture 4 of the main cable are positioned next to each other. They form a kind of separation between the two cable seals 8 that will be inserted into the faces 7 of the two cable-entry apertures 4 during installation of the enclosure. Beside the above described keying and guiding function of the flat portions 18 they do have an additional function in this embodiment. They help to eliminate the influence of a thick main cable on the adjacent seal 8 of a branch cable. The thick main cable might compress the adjacent seal 8 in a way that is not desired thereby influencing the reliability of the whole product. By introducing a separation between the two seals this influence is eliminated.

The upper part 3 of the enclosure provides loops 15 corresponding to the hooks 14 of the base part 2. Figure 5 is a perspective view of the loop 15 of the enclosure 1 shown in Figure 3 and 4 from above. The three cable seals 8 shown in Figure 4 are the same as the one shown in Figure 2 that have already been described with reference to Figure 5.

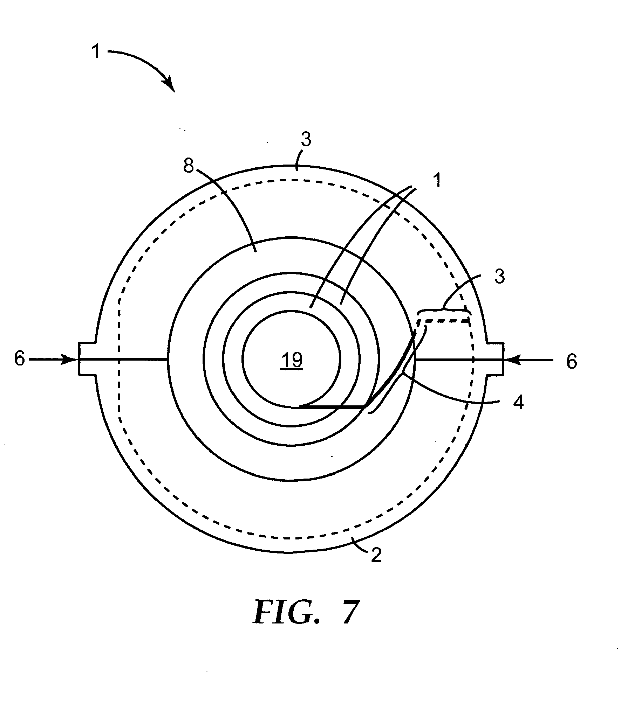

Figure 7 is a front view of a cable-entry aperture 4 of a closed enclosure 1 with a seal 8 in the face 7 provided by the cable-entry aperture 4 of the two housing parts 2 and 3. The contour of the seal 8 that is hidden by the two housing parts 2 and 3 is indicated by a dotted line. The two housing parts 2 and 3 are lying on top of each other thereby building a junction 26 and a cable-entry aperture 4. The seal 8 with its cable-receiving aperture 19 and its removable annular portions 21 can be seen through the cable-entry aperture 4 as well as parts of the curved second portion 24 of the split 22 and the linear extension of the split 22 through the annular portions 21. The first portion 23 of the split 22 and the point 25 between the first 23 and the second portion 24 of the split 22 are hidden by the housing part 3. The outer contour of the seal 8 is hidden by the two housing parts 2 and 3. The first portion 23 of the split 22 is offset the junction 26 of the two housing parts 2 and 3.

## Claims

1. A cable splice enclosure (1) comprising:
two housing parts (2, 3) that define at least one cable-entry aperture (4) into the
enclosure when they are closed;
a cable seal (8) with a cable-receiving aperture (19) therein that is seated against a face (7) provided around the cable-entry aperture by the housing parts;
wherein the seal is split along a line (22) that extends from the external surface of the seal to the cable-receiving aperture to permit a cable to be inserted into the cable-receiving aperture;
**characterized in that**
the split comprises:
(i) a first portion (23) that extends from the external surface of the seal to a point (25) inside the inner circumference of the seal, the first portion being substantially perpendicular to the closing direction (A) of the housing parts; and
(ii) a second portion (24) that is inclined to the first portion and extends there from towards the cable-receiving aperture.

2. A splice enclosure as claimed in claim 1, in which the cable seal (8) has an external surface that is configured to position the seal in a particular orientation in the enclosure (1).

3. A splice enclosure as claimed in claim 2, in which the external surface of the seal (8) comprises a flat portion (17) engageable with a flat surface (18) in the enclosure (1) to position the seal in a particular orientation in the enclosure.

4. A splice enclosure as claimed in claim 3, in which the said flat portion (17) of the external surface of the seal (8) is substantially perpendicular to the first portion (23) of the split (22) in the seal.

5. A splice enclosure as claimed in any of the preceding claims, in which the first portion (23) of the split (22) of the seal is located offset of the junction (26) between the housing parts (2, 3).

6. A splice enclosure as claimed in any of the preceding claims, in which the second portion (24) of the split (22) is curved.

7. A splice enclosure as claimed in any of the preceding claims, in which the seal (8) has a substantially annular shape.

8. A splice enclosure as claimed in any one of the preceding claims, in which the seal (8) comprises at least one annular portion (21) around the cable-receiving aperture (19), the annular portion being removable to increase the size of the cable-receiving aperture.

9. A splice enclosure as claimed in any one of the preceding claims, in which the seal (8) is formed from a compressible foam material.

10. A splice enclosure as claimed in any one of the preceding claims, the enclosure (1) being shaped to contain a branch splice and comprising two cable-entry apertures (4) for a main cable and one cable-entry aperture (4) for a branch cable.

11. A splice enclosure as claimed in any one of the preceding claims, the
enclosure (1) being shaped to contain a T-shaped branch splice.

12. An enclosure as claimed in any one of the claims 1 to 10, the enclosure (1)
being shaped to contain a Y-shaped branch splice.

13. A splice enclosure as claimed in claim 12, the enclosure (1) comprising a
separation (18) between the cable-entry aperture (4) for the branch cable and a cable-entry aperture (4) for the main cable.

14. A splice enclosure as claimed in any one of claims 1 to 9, the enclosure
being shaped to contain an inline splice and comprising two cable-entry apertures for cable ends to be connected.

## Patentansprüche

1. Kabelspleißgehäuse (1), umfassend:
zwei Gehäuseteile (2, 3), die mindestens eine Kabeleintrittsöffnung (4) in das Gehäuse definieren, wenn sie geschlossen sind;
eine Kabeldichtung (8) mit einer kabelaufnehmenden Öffnung (19) darin,
die sich an eine Fläche (7) anlehnt, welche um die Kabeleintrittsöffnung durch die Gehäuseteile bereitgestellt wird;
wobei die Dichtung entlang einer Linie (22) geteilt ist, welche sich von der Außenfläche der Dichtung bis zur kabelaufnehmenden Öffnung erstreckt,
um zu ermöglichen, dass ein Kabel in die kabelaufnehmende Öffnung eingeführt wird;
**dadurch gekennzeichnet, dass** die Teilung umfasst:
(i) einen ersten Abschnitt (23), der sich von der äußeren Fläche der Dichtung bis zu einem Punkt (25) im inneren Umfang der Dichtung erstreckt, wobei der erste Abschnitt im Wesentlichen senkrecht zur Schließrichtung (A) der Gehäuseteile ist; und
(ii) einen zweiten Abschnitt (24), der zum ersten Abschnitt geneigt ist und sich von dort in Richtung auf die kabelaufnehmende Öffnung erstreckt.

2. Spleißgehäuse nach Anspruch 1, bei dem die Kabeldichtung (8) eine Außenfläche hat, die zum Positionieren der Dichtung in einer besonderen Ausrichtung im Gehäuse (1) konfiguriert ist.

3. Spleißgehäuse nach Anspruch 2, bei dem die Außenfläche der Dichtung (8) einen ebenen Abschnitt (17) umfasst, der sich im Eingriff mit einer ebenen Fläche (18) im Gehäuse (1) befinden kann, um die Dichtung in einer besonderen Ausrichtung im Gehäuse zu positionieren.

4. Spleißgehäuse nach Anspruch 3, bei dem der ebene Abschnitt (17) der Außenfläche der Dichtung (8) im Wesentlichen senkrecht zum ersten Abschnitt (23) der Teilung (22) in der Dichtung ist.

5. Spleißgehäuse nach einem der vorherigen Ansprüche, bei dem der erste Abschnitt (23) der Teilung (22) der Dichtung versetzt gegenüber dem Übergang (26) zwischen den Gehäuseteilen (2, 3) ist.

6. Spleißgehäuse nach einem der vorherigen Ansprüche, bei dem der zweite Abschnitt (24) der Teilung (22) gekrümmt ist.

7. Spleißgehäuse nach einem der vorherigen Ansprüche, bei dem die Dichtung (8) eine im Wesentlichen ringförmige Gestalt hat.

8. Spleißgehäuse nach einem der vorherigen Ansprüche, bei dem die Dichtung (8) mindestens einen ringförmigen Abschnitt (21) um die kabelaufnehmende Öffnung (19) umfasst, wobei der ringförmige Abschnitt entfernt werden kann, um die Größe der kabelaufnehmenden Öffnung zu erhöhen.

9. Spleißgehäuse nach einem der vorherigen Ansprüche, bei dem die Dichtung (8) aus einem komprimierbaren Schaummaterial gebildet wird.

10. Spleißgehäuse nach einem der vorherigen Ansprüche, wobei das Gehäuse (1) so geformt ist, dass es eine Zweigspleißung enthält und zwei Kabeleintrittsöffnungen (4) für ein Hauptkabel und eine Kabeleintrittsöffnung (4) für ein Zweigkabel umfasst.

11. Spleißgehäuse nach einem der vorherigen Ansprüche, wobei das Gehäuse (1) so geformt ist, dass es eine T-förmige Zweigspleißung enthält.

12. Gehäuse nach einem der Ansprüche 1 bis 10, wobei das Gehäuse (1) so geformt ist, dass es eine Y-förmige Zweigspleißung enthält.

13. Spleißgehäuse nach Anspruch 12, wobei das Gehäuse (1) eine Trennung (18) zwischen der Kabeleintrittsöffnung (4) für das Zweigkabel und einer Kabeleintrittsöffnung (4) für das Hauptkabel umfasst.

14. Spleißgehäuse nach einem der Ansprüche 1 bis 9, wobei das Gehäuse so geformt ist, dass es eine Inline-Spleißung enthält und zwei Kabeleintrittsöffnungen für Kabelenden umfasst, die verbunden werden sollen.

## Revendications

1. Enceinte d'épissure de câbles (1), comprenant :
deux parties de boîtier (2, 3) qui définissent au moins une ouverture d'entrée de câble (4) à l'intérieur de l'enceinte lorsqu'elles sont fermées ;
un joint d'étanchéité de câble (8) pourvu d'une ouverture de réception de câble (19) dans celui-ci, lequel joint d'étanchéité de câble s'appuie contre une face (7) fournie autour de l'ouverture d'entrée de câble par les parties de boîtier ;
le joint d'étanchéité étant fendu le long d'une ligne (22) qui s'étend à partir de la surface externe du joint d'étanchéité jusqu'à l'ouverture de réception de câble pour permettre à un câble d'être inséré à l'intérieur de l'ouverture de réception de câble ;
**caractérisée en ce que**
la fente comprend :
(i) une première portion (23) qui s'étend à partir de la surface externe du joint d'étanchéité jusqu'à un point (25) à l'intérieur de la circonférence intérieure du joint d'étanchéité, la première portion étant sensiblement perpendiculaire à la direction de fermeture (A) des parties de boîtier ; et
(ii) une deuxième portion (24) qui est inclinée par rapport à la première portion et s'étend à partir de cette dernière en direction de l'ouverture de réception de câble.

2. Enceinte d'épissure selon la revendication 1, dans laquelle le joint d'étanchéité de câble (8) a une surface externe qui est configurée pour positionner le joint d'étanchéité suivant une orientation particulière dans l'enceinte (1).

3. Enceinte d'épissure selon la revendication 2, dans laquelle la surface externe du joint d'étanchéité (8) comprend une portion plate (17) pouvant être mise en prise avec une surface plate (18) dans l'enceinte (1) pour positionner le joint d'étanchéité suivant une orientation particulière dans l'enceinte.

4. Enceinte d'épissure selon la revendication 3, dans laquelle ladite portion plate (17) de la surface externe du joint d'étanchéité (8) est sensiblement perpendiculaire à la première portion (23) de la fente (22) dans le joint d'étanchéité.

5. Enceinte d'épissure selon l'une quelconque des revendications précédentes, dans laquelle la première portion (23) de la fente (22) du joint d'étanchéité est située de manière décalée par rapport à la jonction (26) entre les parties de boîtier (2, 3).

6. Enceinte d'épissure selon l'une quelconque des revendications précédentes, dans laquelle la deuxième portion (24) de la fente (22) est incurvée.

7. Enceinte d'épissure selon l'une quelconque des revendications précédentes, dans laquelle le joint d'étanchéité (8) a une forme sensiblement annulaire.

8. Enceinte d'épissure selon l'une quelconque des revendications précédentes, dans laquelle le joint d'étanchéité (8) comprend au moins une portion annulaire (21) autour de l'ouverture de réception de câble (19), la portion annulaire pouvant être enlevée pour augmenter la taille de l'ouverture de réception de câble.

9. Enceinte d'épissure selon l'une quelconque des revendications précédentes, dans laquelle le joint d'étanchéité (8) est formé à partir d'un matériau en mousse compressible.

10. Enceinte d'épissure selon l'une quelconque des revendications précédentes, l'enceinte (1) étant façonnée pour contenir une épissure de dérivation et comprenant deux ouvertures d'entrée de câble (4) pour un câble principal et une ouverture d'entrée de câble (4) pour un câble de dérivation.

11. Enceinte d'épissure selon l'une quelconque des revendications précédentes, l'enceinte (1) étant façonnée pour contenir une épissure de dérivation en forme de T.

12. Enceinte selon l'une quelconque des revendications 1 à 10, l'enceinte (1) étant façonnée pour contenir une épissure de dérivation en forme d'Y.

13. Enceinte d'épissure selon la revendication 12, l'enceinte (1) comprenant une séparation (18) entre l'ouverture d'entrée de câble (4) pour le câble de dérivation et une ouverture d'entrée de câble (4) pour le câble principal.

14. Enceinte d'épissure selon l'une quelconque des revendications 1 à 9, l'enceinte étant façonnée pour contenir une épissure en ligne et comprenant deux ouvertures d'entrée de câble pour des extrémités de câble devant être connectées.
